(19) Europäisches Patentamt
European Patent Office
Office européen des brevets

(11) **EP 4 815 448 A1**

(12) **EUROPEAN PATENT APPLICATION**

(43) Date of publication:
**30.09.2026 Bulletin 2026/40**

(21) Application number: **25315104.7**

(22) Date of filing: **28.03.2025**

(51) International Patent Classification (IPC):
***H04N 19/172*** $^{(2014.01)}$ ***H04N 19/70*** $^{(2014.01)}$

(52) Cooperative Patent Classification (CPC):
**H04N 19/70; H04N 19/172;** H04N 19/186

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Beijing Xiaomi Mobile Software Co., Ltd.**
**Beijing Beijing 100085 (CN)**

(72) Inventors:
- **Thomas, Emmanuel**
  **Beijing, 100085 (CN)**
- **Potetsianakis, Emmanouil**
  **Beijing, 100085 (CN)**
- **Alexiou, Evangelos**
  **Beijing, 100085 (CN)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD AND APPARATUS FOR CODING ONE OR MORE PICTURES REPRESENTED BY ONE OR MORE PICTURE COMPONENTS**

(57) A method of decoding one or more pictures which are encoded using one or more picture components is described. The method includes determining, from a list of output picture component sets, at least one target output picture component set for a picture to be decoded, wherein the output picture component sets contain different combinations of the picture components of the picture, and decoding encoded data belonging to the at least one target output component set.

Determining, from a list of output picture component sets, at least one target output picture component set for a picture to be decoded, wherein the output picture component sets contain different combinations of the picture components of the picture
S110
Decoding encoded data belonging to the at least one target output component set
S112

Fig. 10

EP 4 815 448 A1

## Description

### Technical Field

The present disclosure generally relates to the field of encoding/decoding pictures, images or videos, and embodiments of the present disclosure concern improvements for decoding picture components of a picture. More specific embodiments of the present disclosure relate to methods and apparatus for decoding a number of picture components from a number of picture components of one or more coded pictures with which the one or more coded pictures or the video data is encoded, hence generating one or more decoded output pictures with less picture components than the number of picture components of the one or more coded pictures.

### Background

The encoding and decoding of a picture, an image or a video is performed in accordance with a certain standard, for example, in accordance with the ISO/IEC 14496-10 Advanced Video Coding (AVC) standard, the ISO/IEC 23094-1 Essential video coding, (EVC) standard, the ISO/IEC 23008-2 High Efficiency Video Coding (HEVC) standard, the ISO/IEC 23090-3 Versatile Video Coding (VVC) standard or the AOMedia Video 1 (AV1) standard.
For coding a picture, an image or a video, e.g., when encoding and/or decoding of the picture, the image or the video, a state-of-the-art process may require the processing of all picture components of a picture.
Thus, there is a need to provide further improvements for coding a picture, an image or a video.

### Summary

The present disclosure provides a method of decoding one or more pictures which are encoded using one or more picture components, the method comprising:

determining, from a list of output picture component sets, at least one target output picture component set for a picture to be decoded, wherein the output picture component sets contain different combinations of the picture components of the picture, and
decoding encoded data belonging to the at least one target output component set.

The present disclosure provides a method of encoding one or more pictures using one or more picture components, the method comprising:

providing a list of output picture component sets, wherein the output picture component sets contain different combinations of the picture components of the picture, and
encoding the list of output picture component sets.

In accordance with embodiments, the list of output picture component sets includes a plurality of output picture component sets and is contained in a data stream including encoded data representing the picture, and wherein the method comprises:

- receiving the data stream, wherein the data stream may further include a profile, tier and level information for the respective output picture component sets, and
- following the decoding of the encoded data belonging to the at least one target output component set, outputting decoded data composed of picture components as defined by the target output picture component set.

In accordance with embodiments, the target output picture component set is determined

- implicitly, or
- responsive to a certain signaling.

In accordance with embodiments, implicitly determining the target output picture component set comprises selecting, as the target output picture component set, the output picture component set from the list which contains a predefined number, e.g., all, of the picture components.
In accordance with embodiments, the certain signaling comprises

- an external signaling not included in the data stream, and/or

- an explicit signaling in the data stream.

In accordance with embodiments, the external signaling is received from an entity to which the decoded picture is provided, wherein the external signaling is received, e.g., in the form of an instruction of an application using the picture or in the form of a user preference to whom the picture is to be presented.
In accordance with embodiments, the external signaling and/or the explicit signaling indicates, from the list of output picture component sets, one or more target output picture component sets.
In accordance with embodiments,

the external signaling and/or the explicit signaling indicates the one or more the target output picture component sets from an ordered list of recommended target output picture component sets, and
the ordered list of recommended target output picture component sets is signaled using a syntax element specifying for each of the plurality of output picture component sets an index in the ordered list of recommended target output picture component sets, wherein the syntax element may be contained in a Sequence Parameter Set, SPS.

In accordance with embodiments, the list of output picture component sets includes a plurality of output picture component sets, and wherein the method comprises encoding the list of the output picture component sets and, optionally, a profile, tier and level information for the respective output picture component sets into a data stream.
In accordance with embodiments, the method comprises:

signaling the output picture component sets,
wherein the signaling comprises one or more of the following syntax elements:

- a syntax element specifying a total number of output picture component sets,
- a syntax element specifying for each of the plurality of output picture component sets which of the one or more picture components of the picture is present in an output picture component set,
- a syntax element specifying the profile, tier and level information for each of the plurality of output picture component sets, and

wherein the one or more syntax elements may be contained in a Sequence Parameter Set, SPS.

The present disclosure provides a non-transitory computer-readable storage medium comprising instructions which, when executed by a computer, cause the computer to carry out the method of any one of the present disclosure.
The present disclosure provides an apparatus of decoding one or more pictures which are encoded using one or more picture components, the apparatus comprising:
a processing module, wherein the processing module is configured to

- determine, from a list of output picture component sets, at least one target output picture component set for a picture to be decoded, wherein the output picture component sets contain different combinations of the picture components of the picture, and
- decode encoded data belonging to the at least one target output component set.

The present disclosure provides an apparatus of encoding one or more pictures using one or more picture components, the apparatus comprising:
a processing module, wherein the processing module is configured to

- provide a list of output picture component sets, wherein the output picture component sets contain different combinations of the picture components of the picture, and
- encode the list of output picture component sets.

The present disclosure provides a data stream having encoded thereinto one or more pictures or video data using one or more picture elements, wherein the data stream comprises:
a signaling indicating one or more of the following:

- a list of output picture component sets, wherein the output picture component sets contain different combinations of the picture components of the picture,
- a list of output picture component sets, wherein the output picture component sets contain different combinations of the picture components of the picture, and a profile, tier and level information for the respective output picture

component sets,

- at least one target output picture component to be selected from a list of output picture component sets and to be used for decoding the picture, wherein the output picture component sets contain different combinations of the picture components of the picture.

The technical solutions provided according to embodiments of the present disclosure have the following beneficial effects.

Conventional approaches for handling a picture or a video, which are composed of channels may lead to an undesired processing, signaling and handling overhead. Stated differently, state-of-the-art processes code pictures by using coupled picture components so that it is always required to process of all picture components associated with the picture. Thus, even when only one or some of the picture components are of interest, this requires encoding, transmitting and decoding all picture components including those not needed which goes together with undesired signaling and processing overhead. For example, this may occur when only the luma component (black and white) is to be obtained from an encoded color picture/video. This may be the case, e.g., for Artificial Intelligence / Machine Learning (AI/ML) processing that only processes the black and white information but not the color information. The above drawbacks are occurring even more frequently when the picture or the video carries channels beyond the color channels with the processing of those additional channels only known at the decoding time, e.g., based on an application, a user preference, a user environment, etc.

Embodiments of the present disclosure addresses the above drawbacks or shortcomings by providing an approach which allows for a decoupling of a number of picture components of one or more decoded output pictures from a number of picture components with which the one or more pictures or the video data is encoded. In accordance with embodiments the decoupling may be achieved by providing a plurality of output picture component sets, and selecting at least one of the plurality of output picture component sets for generating a decoded output picture. The plurality of output picture component sets contain different combinations of the picture components with which a picture is coded, and at least one of the plurality of output picture component sets contains less picture components than a number of picture components of the coded picture. By selecting an output picture component set having less picture components than the coded picture, the decoded output picture is generated with less picture components than the number of picture components of the one or more coded pictures. Embodiments of the present disclosure are advantageous over conventional approaches in that, compared to existing or conventional approaches or technologies only the one or more picture components needed by an application is output thereby saving computational resources by avoiding unnecessary decoding steps and saving unnecessary memory to store the unwanted picture components from the decoded pictures.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

| | |
|---|---|
| Fig. 1 | illustrates video encoding and decoding conventions; |
| Fig. 2(A)-2(C) | illustrate the use of an alpha channel in video encoding and decoding; |
| Fig. 3 | illustrates the Apple ProRes bitstream structure; |
| Fig. 4 | illustrates the Apple ProRes picture syntax; |
| Fig. 5 | illustrates the Apple ProRes slice table syntax; |
| Fig. 6 | illustrates the Apple ProRes slice syntax; |
| Fig. 7 | illustrates the Apple ProRes slice header syntax; |
| Fig. 8 | illustrates a flow diagram of a method of coding one or more pictures in accordance with embodiments of the present disclosure; |
| Fig. 9 | illustrates a flow diagram depicting a decoupling of respective picture components in accordance with embodiments of the present disclosure; |
| Fig. 10 | illustrates a flow diagram of a method of decoding one or more pictures in accordance with embodiments of the present disclosure; |
| Fig. 11(A)-1 1(B) | illustrates a flow diagram depicting a determining a target output picture component set for a picture to be decoded in accordance with embodiments of the present disclosure; |
| Fig. 12 | illustrates a flow diagram of a method of encoding one or more pictures in accordance with embodiments of the present disclosure; |
| Fig. 13 | illustrates an overall process or scenario in accordance with embodiments of the present disclo- |

sure;

Fig. 14 illustrates a block diagram of an apparatus for coding one or more pictures in accordance with embodiments of the present disclosure;

Fig. 15 illustrates a block diagram of an encoder in accordance with embodiments of the present disclosure;

Fig. 16 illustrates a block diagram of a decoder in accordance with embodiments of the present disclosure;

Fig. 17 illustrates a data stream in accordance with embodiments of the present disclosure; and

Fig. 18 illustrates a block diagram illustrating an electronic device according to embodiments of the present disclosure.

**Detailed Description**

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

A picture, like a still picture or a picture part of a video sequence, is composed of one or more "picture channels". The picture channels can be color channels, e.g., red, green, blue, or non-color channels, e.g., the alpha channel.

A still picture may be encoded using a still picture coding scheme, and a picture as part of a video sequence may be encoded using a video coding scheme. The picture is composed of one or more "picture components". After decoding, the picture components of the decoded picture can be output by the decoder to form the picture channels of the decoded picture. Optionally, the decoded picture can be further converted to another color model, e.g., YUV to RGB.

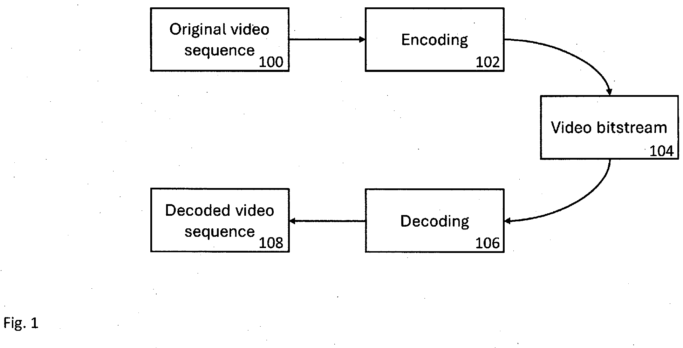

In video encoding and decoding, a data stream resulting from the compression of an uncompressed video sequence is referred to as a video bitstream. The video bitstream is thus the output by a video encoder and it can be fed as input to a video decoder to reconstruct the encoded video. Fig. 1 illustrates video encoding and decoding conventions. An original video sequence 100 is provided and applied to an encoder for encoding 102. Encoding 102 the original video sequence yields the video stream 104 that may be fed to a decoder for decoding 106. Decoding 106 the video stream yields the decoded video sequence 108.

Color images are typically represented using three channels although some may use more channels. An example of a 3-channel color model is the Y’UV model describing a color as a Y’ component (luma) and two chroma components U and V. Y’ indicates that the luma is calculated from gamma-corrected RGB input. Thus, for a color image being represented using the Y’UV model the respective picture components are represented independently. There are different color models around the same category of decomposition as just described. That is, the color information, which is typically captured as a set of color primaries like RGB, is converted to a color model composed a luma channel (Y) and two chroma components (U and V).

A picture and a video may be composed of channels beyond the color channels, i.e., there may be additional picture components, e.g., an alpha channel or a depth channel.

*Alpha Channel*

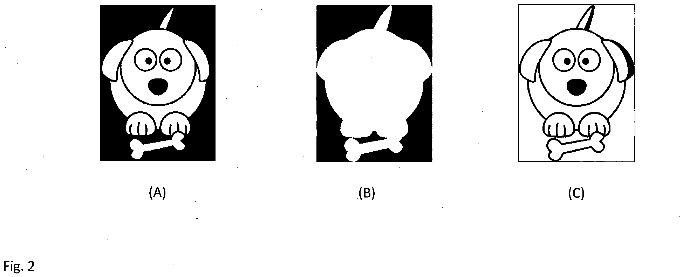

An alpha channel contains information about a transparency of each pixel in a picture. Fig. 2(A) to Fig. 2(C) illustrate the use of the alpha channel. Fig. 2(A) illustrates an image represented with 3 color channels, Fig. 2(B) illustrates the alpha channel of the image of Fig. 2(A) containing transparency information, and Fig. 2(C) illustrates the image rendered with the 3 color channels and the alpha channel for the transparency information. In Fig. 2, the alpha channel is associating a pixel of the color image with a transparency information such background pixels from the color channels, which are represented as black in Fig. 2(A), are not appearing in the rendered image as is illustrated in Fig. 2(C). It is noted

that chroma keying, i.e., associating the transparency to a given color, does not work for this picture since the dog does have a part in black while not being transparent. It is further noted that the above is merely an example in which the alpha channel is binary, but there can be any variation given by the bit depth of the channel. That is, if the alpha channel is an 8-bit image, the value transparency value ranges from 0 to 255. The way the pixel are then blended using existing techniques, generally referred to as alpha blending/composition.

Other applications may use an alpha map associated to a color image. In this case, it is typically called a matte (see [4]).

*Depth Channel*

Another type of non-color channel is a depth channel. A depth channel contains what is commonly known as a depth map (see [1]).

The depth map is an array wherein each sample of the depth map represents a distance between a camera and an object in a scene. When the depth map is associated with an image, then there is a relationship (usually a 1-to-1 mapping based on the pixel location). providing for each pixel of the image an additional depth sample. The depth map can be stored as metadata in an image of video format, for example using the metadata item in the High Efficiency Image File Format (HEIF) standard or using auxiliary layer when encoded with video codec such as High Efficiency Video Coding (HEVC).

The depth map may also be encoded as a constitutive channel of the image at the same level as the color or alpha channels. For example, the Tagged Image File Format (TIFF) supports the creation of custom channels beyond the standard color ones. It allows to have a TIFF image with 5, 6, or even more channels to store additional data such as depth maps, infrared data, or other specialized information.

For the compression of picture components respective video coding schemes, like AVC, HEVC, VVC, etc., and also image coding schemes, e.g., JPEG, PNG , have been designed to compress the information contained in the one or more components of the input video or image. Certain codecs may have coding tools specific to the luma and chroma components or even depth component such as the 3D-HEVC standard.

In some cases, the compression techniques reuse the information of one component to use it with another component or apply prediction techniques from one component to another, hence reducing the amount of information to encode the predicted component. This type of compression techniques introduces what is generally called as a coding dependency from one component on another. This has the consequence that for decoding one component it may be required to decode another component first, or at least parse the information from the other component, on which there is a dependency. In some other cases, the components can have no parsing or coding dependencies.

*Versatile Video Coding (VVC)*

The Versatile Video Coding (VVC) standard referred to both in ISO/IEC 23090-3 and ITU-T H.266 is the latest jointly developed codec from the JVET group, co-organized by VCEG in ITU and MPEG in ISO. Some relevant definitions and extracted text from the VVC standard used in the context of the present disclosure are now given:

**3.24**

**chroma**

sample array or single sample representing one of the two colour difference signals related to the primary colours, represented by the symbols Cb and Cr

**3.86**

**luma**

sample array or single sample representing the monochrome signal related to the primary colours, represented by the symbol or subscript Y or L

**3.41**

**component**

array or single sample from one of the three arrays (*luma* and two *chroma*) that compose a *picture* in 4:2:0, 4:2:2,

or 4:4:4 colour format or the array or a single sample of the array that compose a *picture* in monochrome format

**3.101**

**picture**

array of *luma* samples in monochrome format or an array of *luma* samples and two corresponding arrays of *chroma* samples in 4:2:0, 4:2:2, and 4:4:4 colour format
(from 6.2 Source, decoded and output picture formats)

The video source that is represented by the bitstream is a sequence of pictures in decoding order. The source and decoded pictures are each comprised of one or three sample arrays:

- Luma (Y) only (monochrome).
- Luma and two chroma (e.g., YCbCr or YCgCo).
- Green, blue, and red (GBR, also known as RGB).
- Arrays representing other unspecified monochrome or tri-stimulus color samplings (for example, YZX, also known as XYZ).

For convenience of notation and terminology in this document, the variables and terms associated with these arrays are referred to as luma (or L or Y) and chroma, where the two chroma arrays are referred to as Cb and Cr; regardless of the actual color representation method in use. The actual color representation method in use can be indicated in syntax that is specified in VUI parameters as specified in Rec. ITU-T H.274 | ISO/IEC 23002-7.

**3.133**

**sequence parameter set**

*syntax structure* containing *syntax elements* that apply to zero or more entire *CLVSs* as determined by the content of a *syntax element* found in the *PPS* referred to by a *syntax element* found in each *picture header*

| seq_parameter_set_rbsp() { | **Descriptor** |
|---|---|
| **sps_seq_parameter_set_id** | u(4) |
| **sps_video_parameter_set_id** | u(4) |
| **sps_max_sublayers_minus1** | u(3) |
| **sps_chroma_format_idc** | u(2) |
| **sps_log2_ctu_size_minus5** | u(2) |
| **sps_ptl_dpb_hrd_params_present_flag** | u(1) |
| if( sps_ptl_dpb_hrd_params_present_flag ) | |
| profile_tier_level( 1, sps_max_sublayers_minus1 ) | |
| **sps_gdr_enabled_flag** | u(1) |
| **sps_ref_pic_resampling_enabled_flag** | u(1) |
| ... // *omitted for brevity* | |
| } | |

Table 1 - SubWidthC and SubHeightC values derived from sps_chroma_format_idc

| sps_chroma_format_idc | Chroma format | SubWidthC | SubHeightC |
|---|---|---|---|
| 0 | Monochrome | 1 | 1 |
| 1 | 4:2:0 | 2 | 2 |
| 2 | 4:2:2 | 2 | 1 |

(continued)

| sps_chroma_format_idc | Chroma format | SubWidthC | SubHeightC |
|---|---|---|---|
| 3 | 4:4:4 | 1 | 1 |

In monochrome sampling there is only one sample array, which is nominally considered the luma array.
In 4:2:0 sampling, each of the two chroma arrays has half the height and half the width of the luma array.
In 4:2:2 sampling, each of the two chroma arrays has the same height and half the width of the luma array.
In 4:4:4 sampling, each of the two chroma arrays has the same height and width as the luma array.

*Apple ProRes*

Apple ProRes bitstream syntax

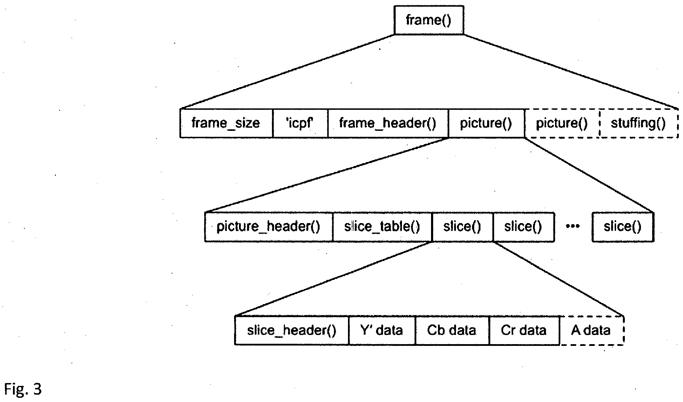

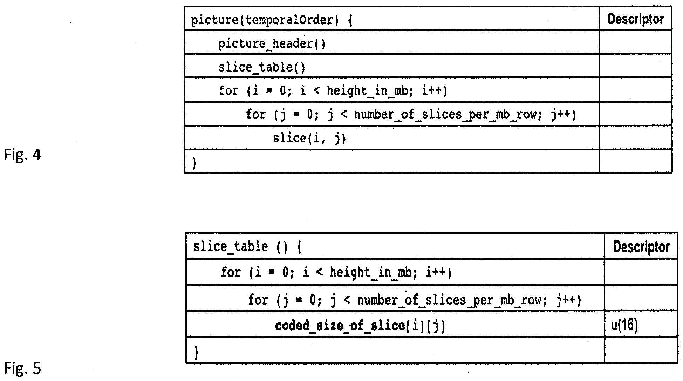

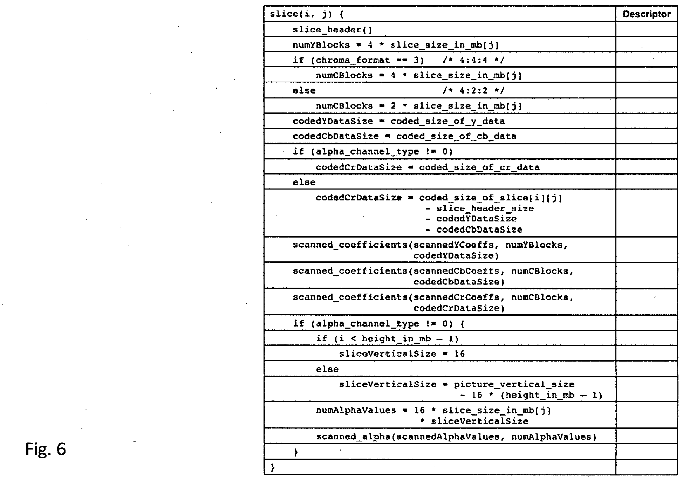

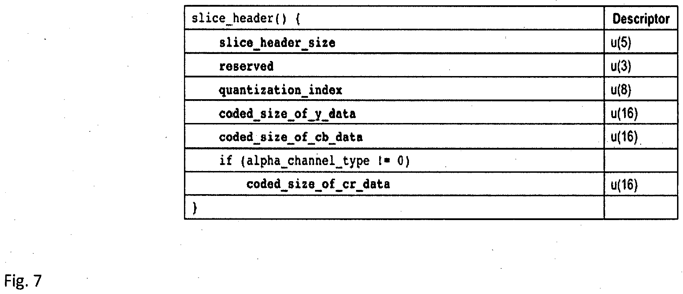

The Apple ProRes video codec [2] and in particular the profiles ProRes 4444 and ProRes 4444 XQ [3] which can encode an alpha channel as a fourth component of each picture of the video sequence. Fig. 3 illustrates the Apple ProRes bitstream structure according to [2]. As can be seen in Fig. 3, the Apple ProRes allows to store 3 color channels (Y', Cb, and CR) and an optional A for alpha channel. Those 4 channels are constitutive of each picture (whose syntax element is picture () ) which is part of a frame (frame () ). In Apple ProRes, there can be two pictures per frame for supporting interlace mode. Finally, the bitstream is made of a series of frames. Fig. 4 illustrates the Apple ProRes picture syntax according to [2], Fig. 5 illustrates the Apple ProRes slice table syntax according to [2], Fig. 6 illustrates the Apple ProRes slice syntax according to [2], and Fig. 7 illustrates the Apple ProRes slice header syntax according to [2].

Apple ProRes decoding process

The Apple ProRes decoding process is specified in clause 7 of [2] as follows:
This section describes the process that a decoder shall follow to reconstruct a frame from a ProRes bitstream. The process is carried out for each compressed slice in the bitstream and consists of these steps:

- Entropy decoding is applied to each of the compressed video components of the slice to produce arrays of scanned color component quantized discrete cosine transform (DCT) coefficients and, if the ProRes bitstream includes an encoded alpha channel, an array of raster-scanned alpha values;
- Inverse scanning is applied to each of the scanned color component quantized DCT coefficient arrays to produce blocks of color component quantized DCT coefficients;
- Inverse quantization is applied to each of the color component quantized DCT coefficient blocks to produce blocks of color component DCT coefficients;
- An inverse discrete cosine transform (IDCT) is applied to each of the color component DCT coefficient blocks to produce blocks of reconstructed color component values;
- Each of the reconstructed color component values is converted to an integral sample of desired bit depth and is written to the appropriate location in the decoded frame buffer (as are the decoded alpha values, if any).

Regarding the above described conventional approaches several disadvantages have been found by the inventors of the present disclosure.
In some scenarios, a video sequence may only carry an alpha map. This is for instance useful for doing alpha composition of two images (e.g. matte). In this case, it is necessary to use the luma component to store the alpha component. If chroma components are mandatory, i.e., there is no monochrome support, then dummy values need to be stored in the chroma components, encoded, decoded, and stored in memory after decoding.
In other scenarios (e.g. matte), the alpha channel may not be needed and therefore an unnecessary computation for decoding the alpha component is performed and unnecessary memory is used to store the decoded alpha values which are output by the decoder.
The above causes the following disadvantages:

- For VVC and Apple ProRes, the decoder is instructed to decode and output all the components present in each picture of each frame.
- In case of Apple ProRes, the alpha channel comes as the 4th component and cannot be the only component.
- In case of VVC, the only way to encode an alpha channel or depth channel only is to use the luma channel and, if the monochrome profile is not supported, the chroma components Cb and Cr are filled with dummy values which are then

encoded, decoded and output.

Thus, conventional approaches for handling a picture or a video, which are composed of channels beyond the color channels, i.e., include additional picture components may lead to an undesired processing, signaling and handling overhead in situations in which the additional picture components, like the alpha channel or the depth channel, are not needed - due to the fact that the additional picture components are always processed when processing the other picture components. Also in situations in which only the additional picture components, like the alpha channel or the depth channel are needed undesired processing, signaling and handling overhead exists - due to the required processing of the other picture components.

Embodiments of the present disclosure addresses the above drawbacks or shortcomings by providing an approach which allows for a decoupling of a number of picture components of one or more decoded output pictures from a number of picture components with which the one or more pictures or the video data is encoded.

In accordance with embodiments of the present disclosure, for coding of one or more pictures a plurality of output picture component sets, i.e., two or more output picture component sets, are provided, and each output picture component set contains different picture components or a different combination of picture components. Stated differently, each of the output picture component set is unique in that it contains a combination of picture components different from any other output picture component set. The number of picture components in some or all of the output picture component sets may be the same or may be different, with different combinations of the picture components. One or more of the plurality of output picture component sets are selected for generating a decoded picture, wherein the output picture component sets include different combinations of picture components with which the picture is encoded.

In accordance with embodiments coding the picture includes:

- providing a plurality of output picture component sets, wherein the plurality of output picture component sets contain different combinations of the picture components of the picture, and encoding the plurality of output picture component sets into a data stream including encoded data representing the picture, and/or
- determining from a plurality of output picture component sets a target output picture component set for a picture to be decoded, wherein the plurality of output picture component sets is included in a data stream including encoded data representing the picture, and wherein the plurality of output picture component sets contain different combinations of the picture components of the picture, and decoding from the data stream encoded data belonging to the target output picture component set.

Thus, in accordance with the present disclosure, a plurality of output picture component sets, i.e., two or more output picture component sets, are provided, and each output picture component set contains different picture components or a different combination of picture components. Stated differently, each of the respective output picture component sets contains a different combination of picture components. The number of picture components in some or all of the output picture component sets may be the same or may be different, with different combinations of the picture components. For example, two output picture component sets #1 and #2 may each contain two picture components, but the sets #1 and #2 must be different in terms of contained picture components, e.g., by containing different combinations of the picture components.

It is noted that in accordance with the present disclosure, there is no order of the picture component in the set. For example, when assuming two picture components A and B, a set including A and B and a set including B and A are the same set, i.e., the sets contain the same combination of picture components.

In the following some examples of valid output picture component sets in accordance with the present disclosure are given, assuming two output picture component sets #1 and #2 and a picture encoded using the picture components: A, B, C, D:

*Example #1*

Output picture component set #1: A, B
Output picture component set #2: C, D
The plurality of output picture component sets #1 and #2 include the same number of picture components but different combinations thereof.

*Example #2*

Output picture component set #1: A, B, C
Output picture component set #2: D
The plurality of output picture component sets #1 and #2 include different numbers of picture components and different combinations thereof. Note that a combination of picture components may include one or more of the picture components, i.e., also only one picture component may be contained in an output picture component.

*Example #3*

Output picture component set #1: A, B, C
Output picture component set #2: A, B, C, D
The plurality of output picture component sets #1 and #2 include different numbers of picture components and different combinations thereof. Note that at least one of plurality of output picture component sets (set #1) contains less picture components (only three) than the number of picture components (four) with which the picture is coded, and that there may be also an output picture component set (set #2) containing all picture components.

It is noted that the present disclosure is not limited to the above examples using two output picture component sets #1 and #2. In accordance with further embodiments, also more than two output picture component sets may be provided.
In accordance with embodiments of the present disclosure, decoding one or more pictures, which are represented by one or more picture components, includes determining from a plurality of output picture component sets a target output picture component set for a picture to be decoded, wherein the plurality of output picture component sets is included in a data stream including encoded data representing the picture, and wherein the plurality of output picture component sets contain different combinations of the picture components of the picture, and decoding from the data stream encoded data belonging to the target output picture component set.
In accordance with embodiments of the present disclosure, encoding one or more pictures, which are represented by one or more picture components, includes providing a plurality of output picture component sets, wherein the plurality of output picture component sets contain different combinations of the picture components of the picture, and encoding the plurality of output picture component sets into a data stream including encoded data representing the picture.
Embodiments of the present disclosure are advantageous over conventional approaches in that, compared to existing or conventional approaches or technologies, from the picture components present in the video bitstream only the one or more picture components needed by an application is output thereby saving computational resources by avoiding unnecessary decoding steps and saving unnecessary memory to store the unwanted picture components from the decoded pictures.

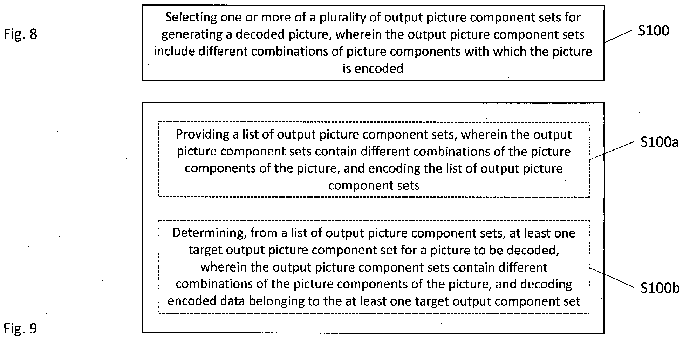

Fig. 8 illustrates a flow diagram of an embodiment of a method of coding one or more pictures. The one or more pictures are represented by one or more picture components, and the method includes the following:
Step S100: Selecting one or more of a plurality of output picture component sets for generating a decoded picture, wherein the output picture component sets include different combinations of picture components with which the picture is encoded.
In accordance with embodiments, coding the picture may include, as is depicted in Fig. 9, step S100a and/or step S100b:

Step S100a: Providing a list of output picture component sets, wherein the output picture component sets contain different combinations of the picture components of the picture, and encoding the list of output picture component sets.
Step S100b: Determining, from a list of output picture component sets, at least one target output picture component set for a picture to be decoded, wherein the output picture component sets contain different combinations of the picture components of the picture, and decoding encoded data belonging to the at least one target output component set.

In accordance with embodiments, a decoder may either sort the list of output picture component sets or select an appropriate combination (output picture component set) from the list. In the latter case, the sorting may be omitted. Selection criteria of a combination or picture component set may be based on an expected or desired quality of a reconstructed image/video. The selection criteria for the combination may include one or more of the following: choosing a combination with N picture components, i.e., a combination having a required number of picture components, selecting a combination with a maximum number of picture components, or selecting a combination that yields the best predicted image reconstruction quality.

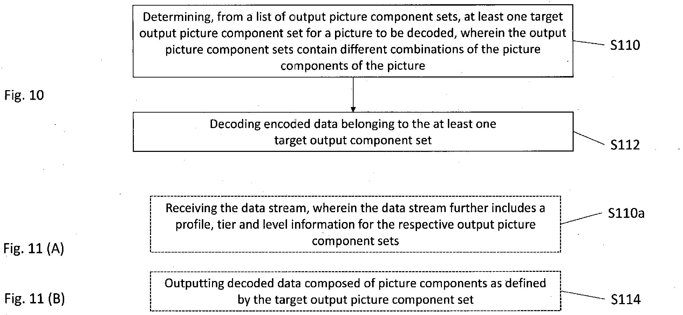

Fig. 10 illustrates a flow diagram of an embodiment of a method of decoding one or more pictures. The one or more pictures are represented by one or more picture components, and the method includes the following:

Step S110: Determining, from a list of output picture component sets, at least one target output picture component set

for a picture to be decoded, wherein the output picture component sets contain different combinations of the picture components of the picture.

Step S112: Decoding encoded data belonging to the at least one target output component set.

In accordance with embodiments, the list of output picture component sets includes a plurality of output picture component sets and is contained in a data stream including encoded data representing the picture, and determining S110 a target output picture component set for a picture to be decoded may further include, as is depicted in Fig. 11(A): Step S110a: Receiving the data stream, wherein the data stream further includes a profile, tier and level information for the respective output picture component sets.

Following the decoding of the encoded data belonging to the at least one target output component set, the method may further include, as is depicted in Fig. 11(B):

Step S114: Outputting decoded data composed of picture components as defined by the target output picture component set.

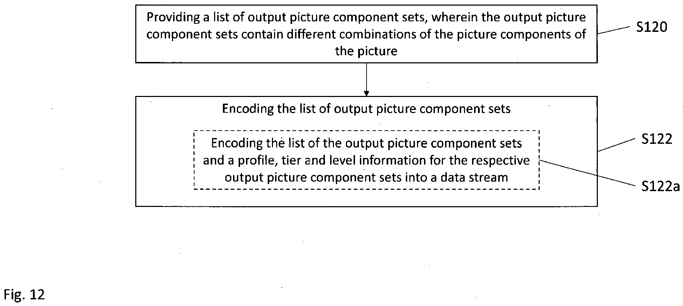

Fig. 12 illustrates a flow diagram of an embodiment of a method of encoding one or more pictures. The one or more pictures are represented by one or more picture components, and the method includes the following:

Step S120: Providing a list of output picture component sets, wherein the output picture component sets contain different combinations of the picture components of the picture.

Step S122: Encoding the list of output picture component sets.

In accordance with embodiments, the list of output picture component sets may be sorted or ordered, e.g., by an encoder. The list may be sorted using one or more certain criteria. In accordance with embodiments, the one or more criteria may include one or more of the following: a number of picture components in a combination (in an output picture component set), an accuracy or effectiveness of a predicted decoded image, or a total area occupied by the picture components. In a combination, picture components may have overlapping regions or may be non-overlapping, as described earlier.

In accordance with embodiments, the list of output picture component sets includes a plurality of output picture component sets, and the method may further include encoding the list of the output picture component sets and a profile, tier and level information for the respective output picture component sets into a data stream, as is schematically depicted at S122a.

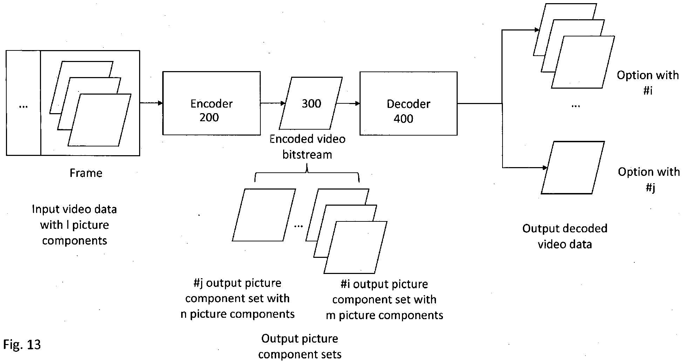

Fig. 13 illustrates an embodiment of an overall process or scenario of the present disclosure. A video encoder 200 encodes video data comprised of one or more picture components, e.g., 1 picture components, into an encoded video bitstream 300. Based on the possible dependencies or lack thereof between the picture components, the encoder 200 encodes the list of possible picture output component sets #j, #i in the bitstream 300 as well as the association information between picture components n, m and those output picture component sets #j, #i.

In the embodiment of Fig. 13, the encoded video bitstream 300 is assumed to include the first output picture component set #j including n of the l picture components of a frame or picture, and the second output picture component set #i including m of the l picture components of the frame or picture. The first and second output picture component sets #j and #i contains different picture components or different combinations of picture components. In the depicted embodiment, the number of picture components in the output picture component sets is different with the first output picture component set #j containing one of the l picture components, and the second output picture component set #i containing three of the l picture components. In accordance with embodiments, $n \leq 1$ and $m \leq 1$ with $n \neq m$ so that an output picture component set may include up to all (1) picture components, with the output picture component sets containing different or unique combinations of the 1 picture components. For example, the first output picture component set #j includes only one of the picture components, like only the alpha channel, while the second output picture component set #i includes three picture components, like only the color channels. In accordance with other embodiments, n and m may be qual ($n = m$), provided the output picture component sets are unique, i.e., each output picture component set contains a unique combination of picture components..

Upon receiving such an encoded video bitstream 300, a video decoder 400 parses a list of output picture component sets and determines the target output picture component set. The determination step can be based on external means, e.g., an application instruction, a user preference, etc., or can be based on an internal logic, e.g., selecting an output picture component set containing all the picture components having an associated profile, tier, level that is supported by the decoder and device hardware. Then the decoder 400 starts decoding the encoded video data and outputs decoded video data according to the target output picture component set #j or #i. It is noted that, in accordance with embodiments, the decoding may be optimized to skip the decoding of unwanted picture components, hence saving computational resource and memory usage. For such embodiments the encoder creates a output picture component set which includes picture components that do not depend on other picture components from a different output picture component set for decoding purposes (either parsing, prediction, entropy, etc., dependencies).

In accordance with embodiments, the encoding and decoding processes may happen:

- on same device or different devices after transmission of the encoded video bitstream, or
- at different times, for example, there may be any time period between the moment of encoding and decoding as it may happen in different video use cases, like local file recording, on-demand video services, live programs, video communications, etc..

In accordance with embodiments, the encoder 300 may encode video data into the encoded bitstream 300 as follows:

1. Encoding the video data represented by a one or more picture components, wherein each picture component is at least associated with one output picture component set.
2. Encoding a list of output picture component sets into the bitstream.
3. Optionally, encoding a profile, tier and level information for each output picture component set.

In accordance with embodiments, the decoder 400 may decode the encoded video bitstream 300 as follows:

1. Receiving from the encoded video bitstream 400, and the video data in the encoded video bitstream 400 may include:

   1.1. A list of output picture component sets.
   1.2. One or more picture components, wherein each picture component is at least associated with one output picture component set.
   1.3. Optionally, a profile, tier and level information for each output picture component set.

2. Determining the target output picture component set from the list of output picture component sets.
3. Decoding the encoded video data belonging to the target output picture component set and outputting the decoded video data composed of picture component as defined by the target output picture component set.

It is noted that embodiments of the present disclosure may be used for video coding schemes allowing for a picture component beyond the color components, such as for an alpha channel or for a depth channel, e.g., the above mentioned Apple ProRes. However, the present disclosure is not limited to such embodiments, rather, in accordance with other embodiments, the teachings of the present disclosure are also applicable to other video coding schemes, such as VVC and the preceding generations such as AVC, HEVC, or AV1, which do not support, e.g., the alpha channel as a picture component but where the luma component can be used to carry alpha or depth channel of a picture. The teachings of the present disclosure may also be applied when only the luma component is useful to decode.
Further embodiments are now described with reference to the VVC standard, however, the subsequently described embodiments are equally applicable to any other video coding scheme.

*Signaling of output picture component sets and the association*

In accordance with embodiments, a signaling of the output picture component sets includes one or more of the following syntax elements:

- a syntax element specifying a total number of output picture component sets,
- a syntax element specifying for each of the plurality of output picture component sets which of the one or more picture components of the picture is present in an output picture component set,
- a syntax element specifying the profile, tier and level information for each of the plurality of output picture component sets.

In accordance with embodiments, the one or more syntax elements are contained in a Sequence Parameter Set, SPS. For example, in VVC, the current syntax element sps_chroma_format_idc provides the chroma format, i.e., the number of components (1 or 3) and the spatial resolution of the chroma component. In accordance with embodiments, the above described list of output picture component sets may be signaled using a new syntax elements in the SPS as follows:

| seq_parameter_set_rbsp( ) { | **Descriptor** |
|---|---|
| **sps_seq_parameter_set_id** | u(4) |
| **sps_video_parameter_set_id** | u(4) |
| **sps_max_sublayers_minus1** | u(3) |
| **sps_chroma_format_idc** | u(2) |
| **sps_num_output_picture_component_sets_minus1** | u(4) |
| for( 0 = 0; i < sps_num_output_picture_component_sets_minus1 + 1; i ++ ) | |
| for( j = 0; j < NumComponents; j++ ) | |
| **sps_output_picture_component_set_flag**[ i ][ j ] | u(1) |
| **sps_log2_ctu_size_minus5** | u(2) |
| **sps_ptl_dpb_hrd_params_present_flag** | u(1) |
| *... // omitted for brevity* | |
| } | |

**sps_num_output_picture_component_sets_minus1** specifies a total number of output picture component sets specified by the SPS.

**sps_output_picture_component_set_flag[ i ][ j ]** equal to 1 specifies that the j-th picture component is an output picture component of the i-th output picture component set, and

**sps_output_picture_component_set_flag[ i ][ j ]** equal to 0 specifies that the j-th picture component is not an output picture component of the i-th output picture component set.

The first syntax element **sps_num_output_picture_component_sets_minus1** indicates the number of output picture component sets present in the bitstream. Since it is assumed that there must be at least one output picture component set, the syntax element is offset by one which means a value 0 means 1 output picture component set.
The second syntax element **sps_output_picture_component_set_flag** indicates for each output picture component set, which picture components are present in this set.
It is noted that that the picture components are assumed to be ordered in the order of Y, Cb and Cr.

*Signaling of profile, tier and level information for each output picture component set*

As specified in the VVC standard, the profile, tier and level information is signaled in the SPS. Per definition, the SPS is associated to one given layer and therefore has one profile_tier_level data structure.
Embodiments of the present disclosure may introduce possibly different profile, tier and level operating point for each output picture component set, so that one profile_tier_level data structure per output picture component set is signaled. Below a modification of the VVC SPS in accordance with embodiments is illustrated which achieves the signaling of the profile_tier_level data structure per output picture component set. It is noted that first changes of the syntax element

**sps_num_output_picture_component_sets_minus1,** and
**sps_output_picture_component_set_flag**

are the ones describe above under the heading *"Signaling of output picture component sets and the association".*

| seq_parameter_set_rbsp( ) { | **Descriptor** |
|---|---|
| **sps_seq_parameter_set_id** | u(4) |
| **sps_video_parameter_set_id** | u(4) |
| **sps_max_sublayers_minus1** | u(3) |
| **sps_chroma_format_idc** | u(2) |
| **sps_num_output_picture_component_sets_minus1** | u(4) |
| for( 0 = 0; i < sps_num_output_picture_component_sets_minus1 + 1; i ++ ) | |
| for( j = 0; j < NumComponents ; j++ ) | |
| **sps_output_picture_component_set_flag**[ i ][ j ] | u(1) |
| **sps_log2_ctu_size_minus5** | u(2) |
| **sps_ptl_dpb_hrd_params_present_flag** | u(1) |
| if( sps_ptl_dpb_hrd_params_present_flag ) { | |
| for( 0 = 0; i < sps_num_output_picture_component_sets_minus1 + 1; i ++ ) { | |
| profile_tier_level( 1, sps_max_sublayers_minus1 ) | |
| } | |
| } | |
| **sps_gdr_enabled_flag** | u(1) |

| *... // omitted for brevity* | |
|---|---|
| } | |

The syntax element **profile_tier_level( 1, sps_max_sublayers_minus1** ) indicates for each output picture component set the respective profile, tier and level information.

As described above, for decoding a picture the target output picture component set may be determined. In accordance with embodiments, the target output picture component set may be determined implicitly or in response to a certain signaling. Determining the target output picture component set, i.e., the output picture component set to be used for decoding and outputting the picture, may be done using one or more of the following:

- Means external of a decoder, e.g., responsive to an application instruction, a user preference, etc.
- Internal means of a decoder, e.g., by an internal logic for implicitly or explicitly determining the target output picture component set.

In all cases, it is assumed that the profile, tier and level requirement associated with a target output picture component set is supported by the decoder and the device hardware.

*External means*

In accordance with embodiments, the decoder is instructed which output picture component set from the list of available output picture component set to use for the decoding and picture output process. For this a decoder application programming interface (API) may be used.

*Implicit internal logic*

In accordance with embodiments, an internal logic may be used which the decoder uses to select the target output picture component set as the one containing all the picture components. For example, a decoder may select by an internal logic one or more of the following:

- the set with the larger number of picture component;
- the first set in the list; or,
- the set that contains 3 color channels.

*Explicit internal logic*

In accordance with embodiments, an explicit signaling may be used to recommend or indicate the target output picture component set. In accordance with embodiments, a single recommended target output picture component set may be signaled, or an ordered list of recommended target output picture component sets (ordered, e.g., from highest to lowest preferences) may be signaled.

In accordance with embodiments, the ordered list of recommended target output picture component sets is signaled using a syntax element specifying for each of the plurality of output picture component sets an index in the ordered list of recommended target output picture component sets. In accordance with embodiments, the syntax element is contained in a Sequence Parameter Set, SPS, e.g., the signaling may be part of the SPS as follows:

| seq_parameter_set_rbsp( ) { | **Descriptor** |
|---|---|
| **sps_seq_parameter_set_id** | u(4) |
| **sps_video_parameter_set_id** | u(4) |
| **sps_max_sublayers_minus1** | u(3) |
| **sps_chroma_format_idc** | u(2) |
| **sps_num_output_picture_component_sets_minus1** | u(4) |
| for( 0 = 0; i < sps_num_output_picture_component_sets_minus1 + 1; i ++ ) { | |
| **sps_target_output_picture_component_set_index**[ i ] | u(4) |
| for( j = 0; j < NumComponents ; j++ ) | |
| **sps_output_picture_component_set_flag**[ i ][ j ] | u(1) |
| } | |
| **sps_log2_ctu_size_minus5** | u(2) |
| **sps_ptl_dpb_hrd_params_present_flag** | u(1) |
| if( sps_ptl_dpb_hrd_params_present_flag ) { | |
| for( 0 = 0; i < sps_num_output_picture_component_sets_minus1 + 1; i ++ ) { | |
| profile_tier_level( 1, sps_max_sublayers_minus1 ) | |
| } | |
| } | |
| **sps_gdr_enabled_flag** | u(1) |
| *... // omitted for brevity* | |
| } | |

**sps_target_output_picture_component_set_index** specifies the index of the i-th output picture component set in the list of recommended target output picture component sets. In accordance with embodiments, the decoder, in the absence of external instructions, is recommended or instructed to select the target output picture component set as the one with the highest index.

In accordance with other embodiments, a single output picture component set may be explicitly signaled via a single syntax element carries the index of the recommended target output picture component or via a list of flags for each output picture component set which indicates whether the associated output picture component set is the recommended target output picture component set.

Further embodiments

So far, the inventive concept has been described with reference to aspects and embodiments concerning methods of coding one or more pictures. In accordance with further embodiments, the present disclosure also provides an apparatus for coding one or more pictures, an encoder for encoding one or more pictures, and a decoder for decoding one or more pictures. The apparatus, encoder and decoder may operate in accordance with the above described embodiments.

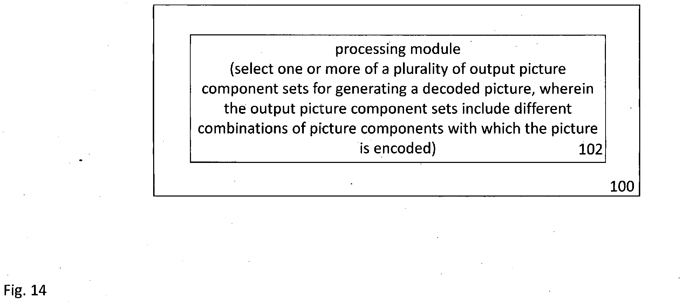

Fig. 14 illustrates a block diagram of an apparatus 100 for coding one or more pictures which are represented by one or more picture components in accordance with embodiments of the present disclosure. The apparatus 100 includes a processing module 102 configured to select one or more of a plurality of output picture component sets for generating a

decoded picture, wherein the output picture component sets include different combinations of picture components with which the picture is encoded.

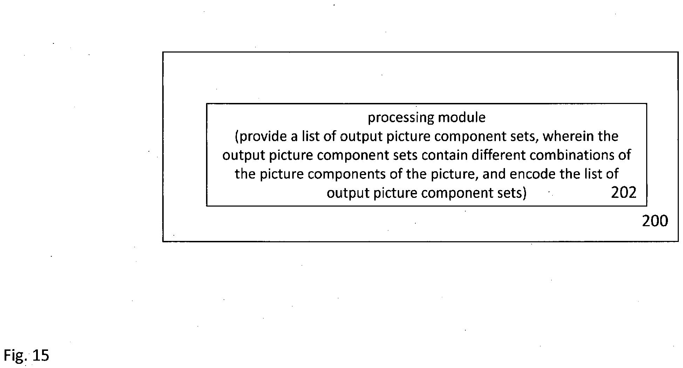

Fig. 15 illustrates a block diagram of an encoder 200 apparatus for encoding one or more pictures which are represented by one or more picture component in accordance with embodiments of the present disclosure. The encoder 200 includes a processing module 202 configured to provide a list of output picture component sets, wherein the output picture component sets contain different combinations of the picture components of the picture, and encode the list of output picture component sets.

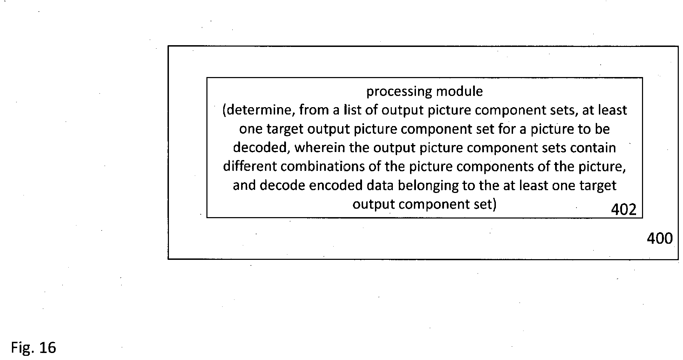

Fig. 16 illustrates a block diagram of a decoder 400 for decoding one or more pictures which are represented by one or more picture component in accordance with embodiments of the present disclosure. The decoder 400 includes a processing module 402 configured to determine, from a list of output picture component sets, at least one target output picture component set for a picture to be decoded, wherein the output picture component sets contain different combinations of the picture components of the picture, and decode encoded data belonging to the at least one target output component set.

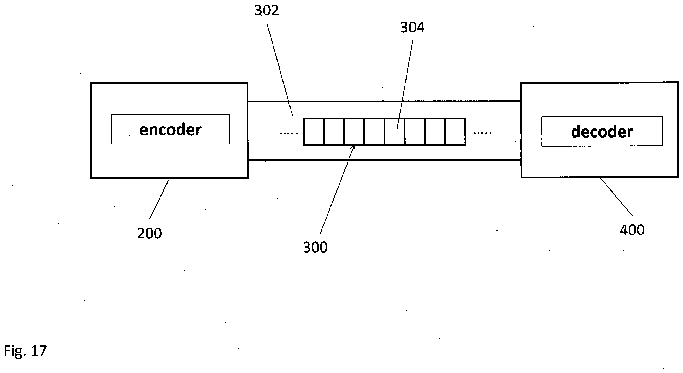

Fig. 17 illustrates a data stream 300 in accordance with embodiments of the present disclosure, which has encoded thereinto a picture and information or data associated with the picture. For example, the data stream or bitstream 300 may be provided by an encoder 200 that operates in accordance with the inventive approach described herein when encoding the picture into the data stream 300. The data stream 300 is transmitted to a decoder 400 via a wired or wireless transmission medium 302, like cable or a radio link, and the decoder 400 decodes from the data stream 300 the picture in accordance with the inventive approach described herein. The data stream includes a signaling 304 in accordance with the inventive approach described herein so as to signal, e.g., by using one or more of the above-described SPS syntax elements, one or more of the following:

- a list of output picture component sets, wherein the output picture component sets contain different combinations of the picture components of the picture,
- a list of output picture component sets, wherein the output picture component sets contain different combinations of the picture components of the picture, and a profile, tier and level information for the respective output picture component sets,
- at least one target output picture component to be selected from a list of output picture component sets and to be used for decoding the picture, wherein the output picture component sets contain different combinations of the picture components of the picture.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

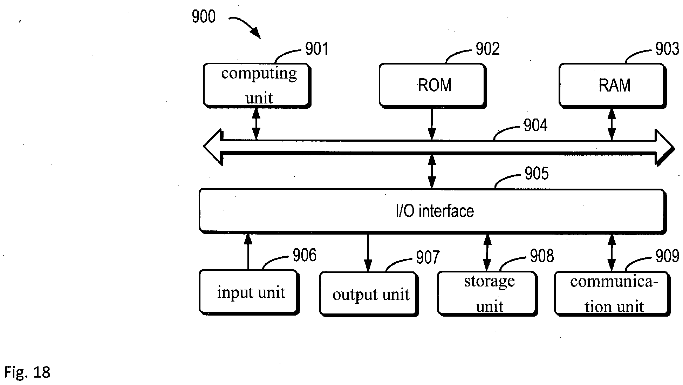

Fig. 18 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer

software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of coding one or more pictures using one or more picture components, the

method comprising:
selecting one or more of a plurality of output picture component sets for generating a decoded picture, wherein the output picture component sets include different combinations of picture components with which the picture is encoded.

A 2nd embodiment provides a method of decoding one or more pictures which are encoded using one or more picture components, the method comprising:
determining, from a list of output picture component sets, at least one target output picture component set for a picture to be decoded, wherein the output picture component sets contain different combinations of the picture components of the picture, and
decoding encoded data belonging to the at least one target output component set.

A 3rd embodiment provides a method of encoding one or more pictures using one or more picture components, the method comprising:

providing a list of output picture component sets, wherein the output picture component sets contain different combinations of the picture components of the picture, and
encoding the list of output picture component sets.

A 4th embodiment provides the method of the 1st embodiment, wherein coding the picture comprises one or more of the following:

- providing a list of output picture component sets, wherein the output picture component sets contain different combinations of the picture components of the picture, and encoding the list of output picture component sets,
- determining, from a list of output picture component sets, at least one target output picture component set for a picture to be decoded, wherein the output picture component sets contain different combinations of the picture components of the picture, and decoding encoded data belonging to the at least one target output component set.

A 5th embodiment provides the method of the 2nd or 4th embodiment, wherein the list of output picture component sets includes a plurality of output picture component sets and is contained in a data stream including encoded data representing the picture, and wherein the method comprises:

- receiving the data stream, wherein the data stream may further include a profile, tier and level information for the respective output picture component sets, and
- following the decoding of the encoded data belonging to the at least one target output component set, outputting decoded data composed of picture components as defined by the target output picture component set.

A 6th embodiment provides the method of the 2nd, 4th or 5th embodiment, wherein the target output picture component set is determined

- implicitly, or

- responsive to a certain signaling.

A 7th embodiment provides the method of the 6th embodiment, wherein implicitly determining the target output picture component set comprises selecting, as the target output picture component set, the output picture component set from the list which contains a predefined number, e.g., all, of the picture components.

An 8th embodiment provides the method of the 6th embodiment, wherein the certain signaling comprises

- an external signaling not included in the data stream, and/or
- an explicit signaling in the data stream.

A 9th embodiment provides the method of the 8th embodiment, wherein the external signaling is received from an entity to which the decoded picture is provided, wherein the external signaling is received, e.g., in the form of an instruction of an application using the picture or in the form of a user preference to whom the picture is to be presented.

A 10th embodiment provides the method of the 8th or 9th embodiment, wherein the external signaling and/or the explicit

signaling indicates, from the list of output picture component sets, one or more target output picture component sets.

An 11th embodiment provides the method of the 10th embodiment, wherein the external signaling and/or the explicit signaling indicates the one or more the target output picture component sets from an ordered list of recommended target output picture component sets.

A 12th embodiment provides the method of the 11th embodiment, wherein, in an absence of the external signaling and/or the explicit signaling, the target output picture component set having a certain, e.g., the highest, index in the ordered list is selected.

A 13th embodiment provides the method of the 11th or 12th embodiment, wherein the ordered list of recommended target output picture component sets is ordered from a target output picture component set with a highest preference to a target output picture component sets with a lowest preference.

A 14th embodiment provides the method of any one of the 11th to 13th embodiments, wherein the ordered list of recommended target output picture component sets is signaled using a syntax element specifying for each of the plurality of output picture component sets an index in the ordered list of recommended target output picture component sets.

A 15th embodiment provides the method of the 14th embodiment, wherein the syntax element is contained in a Sequence Parameter Set, SPS.

A 16th embodiment provides the method of the 3rd or 4th embodiment, wherein the list of output picture component sets includes a plurality of output picture component sets, and wherein the method comprises encoding the list of the output picture component sets and, optionally, a profile, tier and level information for the respective output picture component sets into a data stream.

A 17th embodiment provides the method of any one of the preceding embodiment, comprising:
signaling the output picture component sets.

An 18th embodiment provides the method of the 17th embodiment, wherein the signaling comprises one or more of the following syntax elements:

- a syntax element specifying a total number of output picture component sets,
- a syntax element specifying for each of the plurality of output picture component sets which of the one or more picture components of the picture is present in an output picture component set,
- a syntax element specifying the profile, tier and level information for each of the plurality of output picture component sets.

A 19th embodiment provides the method of the 18th embodiment, wherein the one or more syntax elements are contained in a Sequence Parameter Set, SPS.

A 20th embodiment provides the method of any one of preceding embodiments, wherein the one or more picture components comprise one or more of the following picture channels:

- one or more color channel, like RGB, YUV or Y'UV,
- one or more non-color channel, like an alpha channel containing information about a transparency of one or more pixels in the picture, or a depth channel containing a depth map of the picture and representing a distance between a camera and an object in a scene captured by the picture.

A 21st embodiment provides the method of any one of preceding embodiments, wherein the picture is coded using one of the following coding schemes:

- VCC,
- AVC,
- HEVC,
- AV1.

A 22nd embodiment provides a non-transitory computer-readable storage medium comprising instructions which, when executed by a computer, cause the computer to carry out the method of any one of the preceding embodiments.

A 23rd embodiment provides an apparatus of coding one or more pictures using one or more picture components, the apparatus comprising:
a processing module, wherein the processing module is configured to select one or more of a plurality of output picture component sets for generating a decoded picture, wherein the output picture component sets include different combinations of picture components with which the picture is encoded.

A 24th embodiment provides an apparatus of decoding one or more pictures which are encoded using one or more picture components, the apparatus comprising:
a processing module, wherein the processing module is configured to

- determine, from a list of output picture component sets, at least one target output picture component set for a picture to be decoded, wherein the output picture component sets contain different combinations of the picture components of the picture, and
- decode encoded data belonging to the at least one target output component set.

A 25th embodiment provides an apparatus of encoding one or more pictures using one or more picture components, the apparatus comprising:
a processing module, wherein the processing module is configured to

- provide a list of output picture component sets, wherein the output picture component sets contain different combinations of the picture components of the picture, and
- encode the list of output picture component sets.

A 26th embodiment provides a data stream having encoded thereinto one or more pictures or video data using one or more picture elements, wherein the data stream comprises:
a signaling indicating one or more of the following:

- a list of output picture component sets, wherein the output picture component sets contain different combinations of the picture components of the picture,
- a list of output picture component sets, wherein the output picture component sets contain different combinations of the picture components of the picture, and a profile, tier and level information for the respective output picture component sets,
- at least one target output picture component to be selected from a list of output picture component sets and to be used for decoding the picture, wherein the output picture component sets contain different combinations of the picture components of the picture.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

## Abbreviations

| | |
|---|---|
| AOM | Alliance for Open Media |
| AV1 | AOMedia Video 1 |
| AVC | ISO/IEC 14496-10 Advanced Video Coding (AVC) / ITU-T Rec. H.264 |
| CVS | Coded Video Sequence |
| ISOBMFF | ISO/IEC 14496-12 ISO Base Media File Format |
| H.265 | ITU's name of HEVC |
| HEIF | High Efficiency Image File Format |
| HEVC | ISO/IEC 23008-2 High Efficiency Video Coding (HEVC) / ITU-T Rec. H.265 |
| MPEG | Moving Picture Experts Group |

| | |
|---|---|
| MVC | Multiview Video Coding [refers to ISO/IEC 14496-10 when the techniques in Annex H (Multiview Video Coding) are in use] |
| MVC+D | Multiview Video Coding Plus Depth [refers to ISO/IEC 14496-10 when the techniques in Annex I (Multiview and Depth Video Coding) are in use] |
| MV-HEVC | Multiview High Efficiency Video Coding [refers to ISO/IEC 23008-2 when the techniques in Annex G (Multiview High Efficiency Video Coding) are in use] |
| MVD | Multiview Video Coding Plus Depth [refers to ISO/IEC 14496-10 when the techniques in Annex I (Multiview and Depth Video Coding) or Annex J (Multiview and Depth Video with Enhanced Non-Base View Coding) are in use] |
| RGB | Red Green Blue (color space) |
| SEI | Supplemental Enhancement Information |
| TIFF | Tagged Image File Format |
| VVC | ISO/IEC 23090-3 Versatile Video Coding (VVC) / ITU-T Rec. H.266 |
| VSEI | Versatile Supplemental Enhancement Information messages for coded video bitstreams / ITU-T Rec H.274 |

## References

[1] Overview | Depthmap Metadata | Google for Developers, https://developers.google.com/depthmap-metadata/

[2] Apple ProRes Bitstream Syntax and Decoding Process, SMPTE RDD 36:2015, https://pub.smpte.org/doc/rdd36/20151026-pub/rdd36-2015.pdf

[3] Apple ProRes - Wikipedia, https://en.wikipedia.org/wiki/Apple_ProRes

[4] Accurate Alpha Matting for Portrait Mode Selfies on Pixel 6, https://research.google/blog/accurate-alpha-matting-for-portrait-mode-selfies-on-pixel-6/

## Claims

**1.** A method of decoding one or more pictures which are encoded using one or more picture components, the method comprising:

determining, from a list of output picture component sets, at least one target output picture component set for a picture to be decoded, wherein the output picture component sets contain different combinations of the picture components of the picture, and
decoding encoded data belonging to the at least one target output component set.

**2.** A method of encoding one or more pictures using one or more picture components, the method comprising:

providing a list of output picture component sets, wherein the output picture component sets contain different combinations of the picture components of the picture, and
encoding the list of output picture component sets.

**3.** The method of claim 1, wherein the list of output picture component sets includes a plurality of output picture component sets and is contained in a data stream including encoded data representing the picture, and wherein the method comprises:

- receiving the data stream, wherein the data stream may further include a profile, tier and level information for the respective output picture component sets, and
- following the decoding of the encoded data belonging to the at least one target output component set, outputting decoded data composed of picture components as defined by the target output picture component set.

**4.** The method of any one of the preceding claims, wherein the target output picture component set is determined

- implicitly, or
- responsive to a certain signaling.

**5.** The method of claim 4, wherein implicitly determining the target output picture component set comprises selecting, as the target output picture component set, the output picture component set from the list which contains a predefined number, e.g., all, of the picture components.

**6.** The method of claim 4, wherein the certain signaling comprises

- an external signaling not included in the data stream, and/or
- an explicit signaling in the data stream.

**7.** The method of claim 6, wherein the external signaling is received from an entity to which the decoded picture is provided, wherein the external signaling is received, e.g., in the form of an instruction of an application using the picture or in the form of a user preference to whom the picture is to be presented.

**8.** The method of claim 6 or 7, wherein the external signaling and/or the explicit signaling indicates, from the list of output picture component sets, one or more target output picture component sets.

**9.** The method of claim 8, wherein

the external signaling and/or the explicit signaling indicates the one or more the target output picture component sets from an ordered list of recommended target output picture component sets, and
the ordered list of recommended target output picture component sets is signaled using a syntax element specifying for each of the plurality of output picture component sets an index in the ordered list of recommended target output picture component sets, wherein the syntax element may be contained in a Sequence Parameter Set, SPS.

**10.** The method of any one of the preceding claims, wherein the list of output picture component sets includes a plurality of output picture component sets, and wherein the method comprises encoding the list of the output picture component sets and, optionally, a profile, tier and level information for the respective output picture component sets into a data stream.

**11.** The method of any one of the preceding claims, comprising:

signaling the output picture component sets,
wherein the signaling comprises one or more of the following syntax elements:

- a syntax element specifying a total number of output picture component sets,
- a syntax element specifying for each of the plurality of output picture component sets which of the one or more picture components of the picture is present in an output picture component set,
- a syntax element specifying the profile, tier and level information for each of the plurality of output picture component sets, and

wherein the one or more syntax elements may be contained in a Sequence Parameter Set, SPS.

**12.** A non-transitory computer-readable storage medium comprising instructions which, when executed by a computer, cause the computer to carry out the method of any one of the preceding claims.

**13.** An apparatus of decoding one or more pictures which are encoded using one or more picture components, the apparatus comprising:
a processing module, wherein the processing module is configured to

- determine, from a list of output picture component sets, at least one target output picture component set for a picture to be decoded, wherein the output picture component sets contain different combinations of the picture components of the picture, and
- decode encoded data belonging to the at least one target output component set.

**14.** An apparatus of encoding one or more pictures using one or more picture components, the apparatus comprising:
a processing module, wherein the processing module is configured to

- provide a list of output picture component sets, wherein the output picture component sets contain different combinations of the picture components of the picture, and
- encode the list of output picture component sets.

**15.** A data stream having encoded thereinto one or more pictures or video data using one or more picture elements, wherein the data stream comprises:
a signaling indicating one or more of the following:

- a list of output picture component sets, wherein the output picture component sets contain different combinations of the picture components of the picture,
- a list of output picture component sets, wherein the output picture component sets contain different combinations of the picture components of the picture, and a profile, tier and level information for the respective output picture component sets,
- at least one target output picture component to be selected from a list of output picture component sets and to be used for decoding the picture, wherein the output picture component sets contain different combinations of the picture components of the picture.

Original video sequence
100
Encoding
102
Video bitstream
104
Decoding
106
Decoded video sequence
108

Fig. 1

(A) (B) (C)

Fig. 2

frame()
frame_size
'icpf'
frame_header()
picture()
picture()
stuffing()
picture_header()
slice_table()
slice()
slice()
•••
slice()
slice_header()
Y' data
Cb data
Cr data
A data

Fig. 3

Fig. 4

| picture(temporalOrder) { | Descriptor |
|---|---|
| picture_header() | |
| slice_table() | |
| for (i = 0; i < height_in_mb; i++) | |
| for (j = 0; j < number_of_slices_per_mb_row; j++) | |
| slice(i, j) | |
| } | |

Fig. 5

| slice_table () { | Descriptor |
|---|---|
| for (i = 0; i < height_in_mb; i++) | |
| for (j = 0; j < number_of_slices_per_mb_row; j++) | |
| **coded_size_of_slice[i][j]** | u(16) |
| } | |

| slice(i, j) { | Descriptor |
|---|---|
| slice_header() | |
| numYBlocks = 4 * slice_size_in_mb[j] | |
| if (chroma_format == 3) /* 4:4:4 */ | |
| numCBlocks = 4 * slice_size_in_mb[j] | |
| else /* 4:2:2 */ | |
| numCBlocks = 2 * slice_size_in_mb[j] | |
| codedYDataSize = coded_size_of_y_data | |
| codedCbDataSize = coded_size_of_cb_data | |
| if (alpha_channel_type != 0) | |
| codedCrDataSize = coded_size_of_cr_data | |
| else | |
| codedCrDataSize = coded_size_of_slice[i][j] - slice_header_size - codedYDataSize - codedCbDataSize | |
| scanned_coefficients(scannedYCoeffs, numYBlocks, codedYDataSize) | |
| scanned_coefficients(scannedCbCoeffs, numCBlocks, codedCbDataSize) | |
| scanned_coefficients(scannedCrCoeffs, numCBlocks, codedCrDataSize) | |
| if (alpha_channel_type != 0) { | |
| if (i < height_in_mb – 1) | |
| sliceVerticalSize = 16 | |
| else | |
| sliceVerticalSize = picture_vertical_size - 16 * (height_in_mb – 1) | |
| numAlphaValues = 16 * slice_size_in_mb[j] * sliceVerticalSize | |
| scanned_alpha(scannedAlphaValues, numAlphaValues) | |
| } | |
| } | |

Fig. 6

| slice_header() { | Descriptor |
|---|---|
| **slice_header_size** | u(5) |
| **reserved** | u(3) |
| **quantization_index** | u(8) |
| **coded_size_of_y_data** | u(16) |
| **coded_size_of_cb_data** | u(16) |
| if (alpha_channel_type != 0) | |
| **coded_size_of_cr_data** | u(16) |
| } | |

Fig. 7

Fig. 8

Selecting one or more of a plurality of output picture component sets for generating a decoded picture, wherein the output picture component sets include different combinations of picture components with which the picture is encoded

S100

Providing a list of output picture component sets, wherein the output picture component sets contain different combinations of the picture components of the picture, and encoding the list of output picture component sets

S100a

Determining, from a list of output picture component sets, at least one target output picture component set for a picture to be decoded, wherein the output picture component sets contain different combinations of the picture components of the picture, and decoding encoded data belonging to the at least one target output component set

S100b

Fig. 9

Determining, from a list of output picture component sets, at least one target output picture component set for a picture to be decoded, wherein the output picture component sets contain different combinations of the picture components of the picture
S110
Fig. 10
Decoding encoded data belonging to the at least one target output component set
S112
Receiving the data stream, wherein the data stream further includes a profile, tier and level information for the respective output picture component sets
S110a
Fig. 11 (A)
Outputting decoded data composed of picture components as defined by the target output picture component set
S114
Fig. 11 (B)

Providing a list of output picture component sets, wherein the output picture component sets contain different combinations of the picture components of the picture
S120
Encoding the list of output picture component sets
Encoding the list of the output picture component sets and a profile, tier and level information for the respective output picture component sets into a data stream
S122
S122a

Fig. 12

...
Frame
Input video data
with I picture
components
Encoder
200
300
Encoded video
bitstream
Decoder
400
...
#j output picture
component set with
n picture components
#i output picture
component set with
m picture components
Output picture
component sets
Option with
#i
...
Option with
#j
Output decoded
video data

Fig. 13

processing module
(select one or more of a plurality of output picture component sets for generating a decoded picture, wherein the output picture component sets include different combinations of picture components with which the picture is encoded) 102

100

Fig. 14

processing module
(provide a list of output picture component sets, wherein the output picture component sets contain different combinations of the picture components of the picture, and encode the list of output picture component sets) 202

200

Fig. 15

processing module
(determine, from a list of output picture component sets, at least one target output picture component set for a picture to be decoded, wherein the output picture component sets contain different combinations of the picture components of the picture, and decode encoded data belonging to the at least one target output component set) 402

400

Fig. 16

302
304
encoder
.....
.....
decoder
200
300
400

Fig. 17

900
901
computing unit
902
ROM
903
RAM
904
905
I/O interface
906
input unit
907
output unit
908
storage unit
909
communication unit

Fig. 18

Europäisches
Patentamt
European
Patent Office
Office européen
des brevets

# EUROPEAN SEARCH REPORT

Application Number
EP 25 31 5104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Draft text of ISO/IEC 14496-15:2019 FDAM 2 Carriage of VVC and EVC in ISOBMFF", 133. MPEG MEETING; 20210111 - 20210115; ONLINE; (MOTION PICTURE EXPERT GROUP OR ISO/IEC JTC1/SC29/WG11), , no. n19981 2 March 2021 (2021-03-02), XP030293697, Retrieved from the Internet: URL:https://dms.mpeg.expert/doc_end_user/documents/133_OnLine/wg11/MDS19981_WG03_N00149.zip WG03N00149_19981_14496-15_draft_FDIS.docx [retrieved on 2021-03-02] * page 5, paragraph 3.1.30 * * page 31, paragraph 5.3.3.1.2 - page 32 * * page 177, paragraph 11.4.19.3 - page 178 * ----- | 1-15 | INV. H04N19/172 H04N19/70 |
| X | US 2015/063467 A1 (HENDRY HENDRY [KR] ET AL) 5 March 2015 (2015-03-05) * paragraph [0049] - paragraph [0058] * * paragraph [0127] - paragraph [0139] * ----- | 1-15 | |
| | | | TECHNICAL FIELDS SEARCHED (IPC) |
| | | | H04N |

The present search report has been drawn up for all claims

1

| Place of search | Date of completion of the search | Examiner |
|---|---|---|
| Munich | 9 September 2025 | Moschetti, Fulvio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 31 5104

This annex lists the patent family members relating to the patent documents cited in the above-mentioned European search report. The members are as contained in the European Patent Office EDP file on The European Patent Office is in no way liable for these particulars which are merely given for the purpose of information.

09-09-2025

| Patent document cited in search report | Publication date | Patent family member(s) | Publication date |
|---|---|---|---|
| US 2015063467 A1 | 05-03-2015 | KR 20140140016 A | 08-12-2014 |
| | | US 2015063467 A1 | 05-03-2015 |
| | | WO 2013137697 A1 | 19-09-2013 |

EPO FORM P0459

For more details about this annex : see Official Journal of the European Patent Office, No. 12/82